# EUROPEAN PATENT SPECIFICATION

(11) **EP 0 966 322 B1**
(45) Date of publication and mention of the grant of the patent: **02.03.2005**
(21) Application number: 96944390.2
(22) Date of filing: 18.12.1996
(51) Int. Cl.: B01J 31/00, B01J 37/02, C07F 5/06, C08F 4/44

(54) **PROCESS FOR OLEFIN POLYMERISATION COMPRISING THE NON-HYDROLYTIC PREPARATION OF ALUMINOXANES**
VERFAHREN ZUR OLEFINPOLYMERISATION, DAS DIE NICHT-HYDROLYTISCHE HERSTELLUNG VON ALUMINOXAN UMFASST
PROCEDE POUR LA POLYMERISATIONS DES OLEFINES COMPRENANT LA PREPARATION NON-HYDROLYTIQUE DES ALUMINOXANES

(30) Priority: 22.12.1995 US 576892
(43) Date of publication of application: 29.12.1999
(73) Proprietor: AKZO NOBEL N.V., 6800 SB Arnhem (NL)
(72) Inventor: SMITH, Gregory, M., Danbury, CT 06811 (US); PALMAKA, Stanley, W., Yonkers, NY 10701 (US); ROGERS, Johnathan, S., Belvidere, NJ 07823 (US); MALPASS, Dennis, B., La Porte, TX 77571 (US); MONFISTON, Daniel, J., Spring Valley, NY 10977 (US)
(74) Representative: Schalkwijk, Pieter Cornelis
(86) International application number: PCT/US1996/019980
(87) International publication number: WO 1997/023288

(56) References cited:
- EP-A- 0 561 476
- WO-A-89/02453
- JP-A- 5 059 068
- US-A- 4 544 762
- US-A- 5 235 081
- US-A- 5 728 855
- HYDRNEY; MEISTERS; MOLE: 'C-Methylation of alcohols by trimethylaluminium' AUST.J.CHEM 1974, pages 1639 - 1659

## Description

### Background of the Invention

The present invention relates to a novel olefin polymerization process involving the synthesis of aluminoxanes by non-hydrolytic means. Aluminoxanes are well known as components for olefin polymerization catalysts.

Aluminoxane compounds are chemical species that incorporate Al-O-Al moieties. While a wide range of aluminoxane species are known, their exact structures are not precisely known. The following structures (where R is alkyl and X is an integer of from about 1 to about 40) have been depicted:

R₂Al-O-AlR₂

(R₂Al-O-AlR₂)₂

R-(RAlO)ₓ-AlR₂

(RAlO)ₓ

Cyclic and cage cluster structures have also been proposed. Such materials, as would be recognized by the person of ordinary skill in the art are complex mixtures of various species which can easily undergo dynamic exchange reactions and structural rearrangements. A recent review of these materials was authored by S. Pasynkiewicz and appears in Polyhedron, Vol. 9, pp. 429-453 (1990).

Methylaluminoxanes, sometimes termed "polymethylalumin-oxanes" (PMAOs) are well known materials with wide utility in olefin polymerization using single-site, or metallocene-based, polymerization catalyst systems (See, for example, Col. 1, lines 14-29 of U.S. Patent No. 4,960,878 to C. C. Crapo et al.). PMAOs are conventionally prepared by controlled hydrolysis of trimethylaluminum (TMAL). Generally, hydrolysis occurs with some loss of aluminum to insoluble species. Generally, PMAOs also have very low solubility in aliphatic solvents, which limits their utility, as well as poor storage stability for solutions containing them. (See, for example, Col. 1, lines 30-46 of U.S. Patent No. 4,960,878). Finally, it is generally polymethylaluminoxanes that have been the most useful products of this general class of material: other alkylaluminoxanes do not work as well. Since TMAL is an expensive starting material, the resulting PMAO is expensive.

The problems of low yield, poor solubility, poor storage stability, and expensive reagents in preparation of PMAO have previously been attacked, with only limited success, in several ways. One method was to make predominantly PMAO, but include some components from hydrolysis of other aluminum alkyls, to form the so-called "modified methylaluminoxane" (MMAO). This yields predominantly methyl-containing aluminoxanes in improved yields, with improved solution storage stability as well as improved solubility in aliphatic solvents, at lower cost. However, since alkyl groups other than methyl are present, these materials are not always as effective as conventional PMAO.

The prior art contains certain disclosures which are deemed to be particularly germane to the present invention, including a series of related publications by T. Mole and coworkers (E. A. Jeffrey et al., Aust. J. Chem. 1970, 23, 715-724; A. Meisters et al., Journal of the Chemical Society, Chem. Comm. 1972, 595-596; D. W. Harney et al., Aust. J. Chem. 1974, 27, 1639-1653; A. Meisters et al., Aust. J. Chem. 1974, 27, 1655-1663; and A. Meisters et al., Aust. J. Chem. 1974, 27, 1665-1672) which describe the exhaustive methylation of oxygen-containing organic substrates by trimethylaluminum (hereinafter abbreviated as "TMAL" for simplicity). Some of the reactions that these publications report are listed hereinbelow: ${\text{Ph}}_{\text{3}} {\text{COH → Ph}}_{\text{3}} \text{CMe}$ Excess TMAL, 19 hrs., 80 °C ${\text{Ph}}_{\text{2}} {\text{(Me)COH →Ph}}_{\text{2}} {\text{CMe}}_{\text{2}}$ Excess TMAL, 20 hrs., 85 °C ${\text{Ph(Me)}}_{\text{2}} {\text{COH → PhCMe}}_{\text{3}}$ Excess TMAL, 18 hrs., 110 °C ${\text{Me}}_{\text{3}} {\text{COH → CMe}}_{\text{4}}$ Excess TMAL, 42 hrs., 120 °C ${\text{(4-Me-Ph)}}_{\text{2}} {\text{CO → (4-Me-Ph)}}_{\text{2}} {\text{CMe}}_{\text{2}}$ Excess TMAL, trace benzoic acid, 2 hrs., 170 °C ${\text{PhC(O)Me → PhCMe}}_{\text{3}}$ Excess TMAL, 65 hrs., 122 °C ${\text{Me}}_{\text{2}} {\text{CO → CMe}}_{\text{4}}$ Excess TMAL, 80 hrs., 175 °C ${\text{PhCO}}_{\text{2}} {\text{H → PhCMe}}_{\text{3}}$ Excess TMAL, 24 hrs., 130-150 °C ${\text{MeCO}}_{\text{2}} {\text{H → CMe}}_{\text{4}}$ Excess TMAL, 23 hrs., 130 °C

This work focused on conversion of the organic substrates, and only speculates occasionally on the aluminum containing products formed. Some of the comments they do make include, e.g., Equation (6) of Meisters et al.(Aust. J. Chem. 1974, 27, 1655-1663) which shows [Me₂AlOAlMe₂] as a speculative product; as well as Equation (6) of Meisters et al. (Aust. J. Chem. 1974, 27, 1665-1672) which also shows [Me₂AlOAlMe₂] as a speculative product. Another relevant comment made in these disclosures is that these reactions do not remain homogeneous (see the footnote on page 1643 of Harney et. al, Aust. J. Chem. 1974, 27, 1639-1653).

Another relevant comment appears in Comprehensive Organometallic Chemistry II, E.W. Abel et al., eds., New York NY, Pergamon, 1995, Vol. 1, p. 452 where several preparations of aluminoxanes are given, including those set forth in Equations (54)-(57) and Scheme 8. Aluminoxanes of these preparative methods, however, are said to be unsuitable as cocatalysts for single-site catalysts.

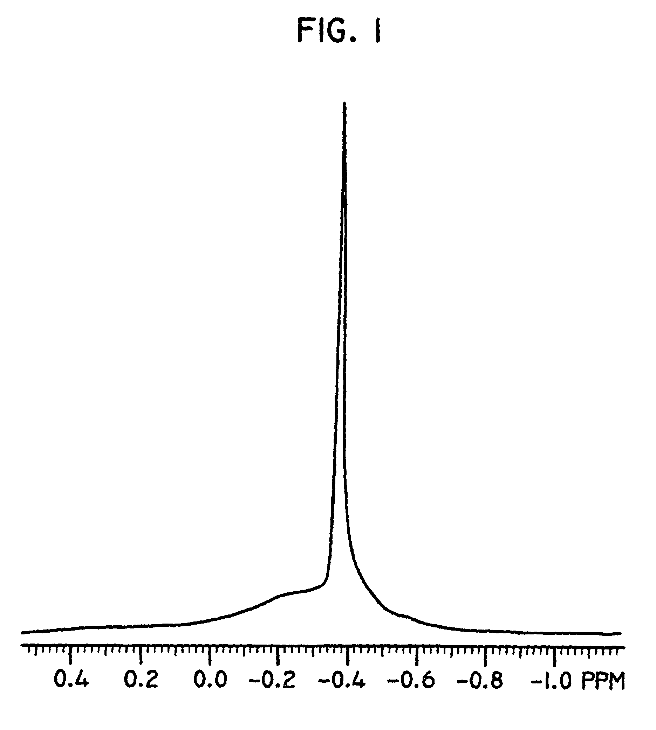

Another problem well known in the art is the inevitable presence of trimethylaluminum (TMAL) in the polymethyl-aluminoxane (PMAO) product. In particular, L. Resconi et al, Macromol. 1990, 23, 4489-4491 and the references cited therein show that PMAO prepared in the normal manner contains both methylaluminoxane species as well TMAL species. These researchers based their conclusion on, among other things, the presence of two signals in the ¹H NMR of PMAO. Fig. 1, which forms a part of the present specification, illustrates the ¹H NMR of commercially available PMAO with the spectrum being composed of both a broad peak, attributed to methylaluminoxane species, and a distinct second peak, attributed to trimethylaluminum species. M.S. Howie, "Methylaluminoxane and Other Aluminoxanes-Synthesis, Characterization and Production", Proceedings, MetCon '93, pp. 245-266, Catalyst Consultants Inc., Houston, TX 1993, has also noted that PMAO invariably contains TMAL. For instance, on page 247 it is stated that "MAO always contains some amount of TMA". Further, Howie notes that "total removal of TMA from MAO has not been demonstrated, and reduction to low levels creates other problems".

### Summary of the Invention

The present invention, in one embodiment, relates to a process involving the synthesis of a catalytically useful composition comprising alkylaluminoxane which is substantially free of trialkylaluminum content. The ¹H NMR of the product for example, does not separately distinguish TMAL as a species which is present therein.

The aluminoxanes can be produced from a particular type of aluminoxane precursor composition, which will be described in greater detail below, using non-hydrolytic means (e.g., by thermal and/or catalytic means). The intermediate aluminoxane precursor composition, which is ultimately capable of being transformed by the aforementioned non-hydrolytic means to the desired aluminoxane product, is formed by treating a trialkylaluminum compound, or mixtures thereof, with a reagent that contains a carbon-oxygen bond. This treatment to form the intermediate aluminoxane precursor composition is followed by the aforementioned non-hydrolytic transformation of the intermediate aluminoxane precursor composition to give a catalytically useful aluminoxane composition. It should be clearly understood that the process described herein can be used to form the alkylaluminoxane referred to in the first paragraph of this section of the specification as well as conventional polymethylaluminoxane compositions that are not substantially free of TMAL as a species which is present therein as measured by the ¹H NMR spectrum of the product. It should also be recognized that the process described herein is useful for the formation of alkylaluminoxanes, in general, as well as the formation of polymethylaluminoxane. In most cases it may be desirable to obtain a polymethylaluminoxane product with a low free TMAL content. However, the amount of free TMAL remaining in the aluminoxane composition may be adjusted from very low levels to over 50% by controlling the stoichiometry and reaction conditions in the process.

The present invention, in a preferred embodiment, involves the synthesis of polymethylaluminoxane compositions of improved solution stability which also have the desirable feature of compatibility with aliphatic hydrocarbon solvents, such as hexane, heptane, octane or decane. The methylaluminoxane product gives high activities in polymerization of olefin monomer(s).

### Description of the Drawings

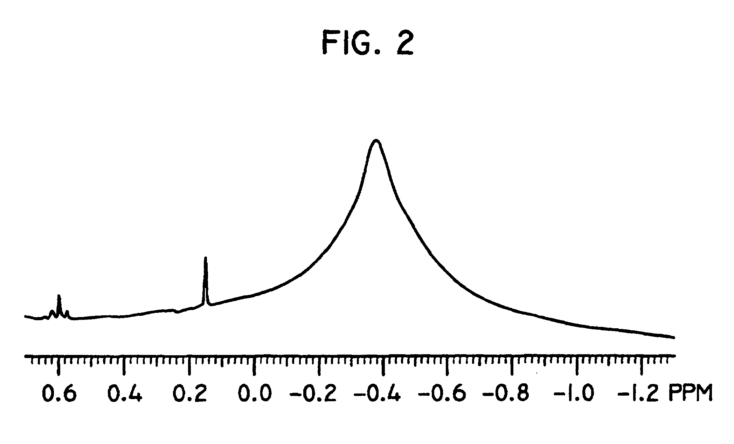

The Drawings which form a portion of this Specification are provided herewith to further illustrate certain attributes of the present invention. Fig. 1 illustrates the ¹H NMR of commercially available PMAO with the spectrum being composed of both a broad peak, attributed to methylaluminoxane species, and a distinct second peak, attributed to trimethylaluminum species. Fig. 2 shows a PMAO product, which is easily handled and which performs well, but which is substantially free of TMAL as a species that can be separately distinguished by ¹H NMR.

### Description of Preferred Embodiments

As just mentioned, a preferred embodiment of the present invention relates to a process comprising a step of forming by the non-hydrolytic conversion of suitably constituted alkylaluminoxane precursor compositions, catalytically useful methylaluminoxane compositions.

The intermediate precursor composition is an organoaluminum composition which is constituted such that it contains alkyl groups, initially bound to aluminum which are capable of alkylation of groups, also contained in the precursor, which contain a carbon-to-oxygen bond. When the alkylation of such carbon-oxygen containing groups occurs, the oxygen atoms contained in such groups in the precursor are incorporated into alkylaluminum moieties during that part of the present process in which the intermediate precursor is transformed to the desired aluminoxane product.

It will be appreciated by a person of ordinary skill in the art that there are many ways of forming the intermediate precursor composition which must contain some amount of alkylaluminum groups as well as some carbon which is chemically bound to oxygen and susceptible to alkylation by an alkylaluminum group. For the purposes of illustrating the nature of these precursor compositions, the following discussion will provide examples of methods for forming suitable compositions of that type. This discussion, however, should not be construed as limiting the present invention to the particular methods which may be exemplified herein, for example, for preparing the preferred aluminoxane precursor composition, which may incorporate a wide range of chemical species therein without precisely known chemical structure. For instance, as will become apparent from the following description, if a ketone, such as benzophenone, is reacted with a trialkylaluminum compound, such as trimethylaluminum, an addition reaction will occur. The result will be a composition containing alkylaluminum groups (in this case, methylaluminum) and functional groups where carbon is also bound to oxygen (in this case, a 1,1-diphenyl-ethoxy functional group): ${\text{Me}}_{\text{3}} {\text{Al + 0.8 R}}_{\text{2}} {\text{C=O ―> Me}}_{\text{2.2}} {\text{Al(OC(Ph)}}_{\text{2}} {\text{Me)}}_{\text{0.8}}$Analogous precursor compositions can be formed in alternative ways, as will be described in more detail below. As another example, a salt metathesis reaction can be depicted as follows: ${\text{Me}}_{\text{2.2}} {\text{AlCl}}_{\text{0.8}} {\text{+ 0.8 NaOC(Ph)}}_{\text{2}} \text{Me →} {\text{Me}}_{\text{2.2}} {\text{Al(OC(Ph)}}_{\text{2}} {\text{Me)}}_{\text{0.8}} \text{+ 0.8 NaCl}$

As earlier mentioned, the precursor intermediate composition can be formed by using a reagent, containing a carbon-to-oxygen chemical bond. Suitable reagents which can be used can be selected from the alcohols, the ketones, and the carboxylic acids as representative examples. A particularly suitable inorganic reagent which has been found to work is carbon dioxide.

In the preferred embodiment of the present invention, use is made of the precursor composition formed by treating trimethylaluminum with an oxygenated organic compound such as an alcohol, ketone, carboxylic acid or carbon dioxide. In the case of carboxylic acids or carbon dioxide, some aluminoxane moieties will form (see, for example, copending application U.S. Serial No. 08/651,290, filed on May 22, 1996). In all these cases, as is well known in the art (see, for instance, the citations to exhaustive methylation given above, and references cited therein) , alkoxyaluminum or arylalkoxyaluminum moieties will be formed. The following equations represent possible, non-limiting, examples of the reactions of trimethylaluminum and oxygenated organic molecules to form alkoxyaluminum or arylalkoxyaluminum-based aluminoxane precursor compositions (R and R' being the same or different and being selected from alkyl and/or aryl and TMAL indicating trimethylaluminum): ${\text{ROH + 2 Me}}_{\text{3}} {\text{Al ―> MeH + Me}}_{\text{5}} {\text{Al}}_{\text{2}} \text{(OR)}$${\text{ROH + Me}}_{\text{3}} {\text{Al → MeH + 1/2 (Me}}_{\text{4}} {\text{Al}}_{\text{2}} {\text{(OR)}}_{\text{2}} \text{)}$ ${\text{RC(O)R' + 2 Me}}_{\text{3}} {\text{Al → Me}}_{\text{5}} {\text{Al}}_{\text{2}} \text{(OCMeRR')}$${\text{RCO}}_{\text{2}} {\text{H + 3 Me}}_{\text{3}} \text{Al →} {\text{1/2(Me}}_{\text{4}} {\text{Al}}_{\text{2}} {\text{(OCMe}}_{\text{2}} {\text{R)}}_{\text{2}} {\text{) + [Me}}_{\text{2}} {\text{AlOAlMe}}_{\text{2}} \text{]}$

The most preferred embodiment of the present invention involves the use of a carboxylic acid or carbon dioxide as they form both a methylaluminoxane precursor containing the alkoxyaluminum or arylalkoxyaluminum moieties and the desired methylaluminoxane products.

Once this preferred methylaluminoxane precursor composition is formed, the key component of the present invention is the thermal and/or catalytic transformation of this precursor to form the desired catalytically useful methylaluminoxane composition. While the prior art teaches that these precursor compositions can be transformed to form exhaustively methylated organic derivatives, it does not disclose the formation of catalytically active aluminoxane compositions, nor does it teach the proper conditions to form such a catalytically useful composition comprising methylaluminoxane. A recent review in the prior art (Comprehensive Organometallic Chemistry II, Vol. 1, p. 452) suggests, in fact, that polymethylaluminoxane processes based on carboxylic acid reagents "do not produce aluminoxanes suitable for catalytic applications". The prior art additionally fails to recognize the aliphatic hydrocarbon solubility and improved storage stability characteristics of the preferred products of the process as well as the possibility of manufacturing the novel low TMAL-containing product of certain embodiments of the instant invention. The prior art appears to be silent on exhaustive methylation of carbon dioxide. Furthermore, as the Examples provided hereinbelow illustrate, we have discovered conditions where this reaction remains homogeneous, in contrast to the heterogeneous examples of the prior art.

The present invention has also discovered that formation of PMAO, for example, by the present invention yields, in certain embodiments, a product substantially free of TMAL since separate signals for PMAO and TMAL are not observed in the ¹H NMR spectrum of the product.

The process produces high recoveries of aluminum as compared to hydrolytic processes for making aluminoxanes as conventionally known to the art. The process also is capable of producing polymethylaluminoxane with improved storage stability as compared to hydrolytic processes for making aluminoxanes as conventionally known to the art. Finally, the process of this invention is capable of producing polymethylaluminoxane in high yield in the presence of aliphatic solvents, unlike hydrolytic processes for making aluminoxanes as conventionally known in the art.

The preferred method for transforming the methylaluminoxane precursor is to optionally add, or form in situ, a catalytically effective amount of methylaluminoxane with the precursor and heat the material at the lowest temperature sufficient to effect conversion to the desired methylaluminoxane composition in a reasonable amount of time. This reaction can also be facilitated by increasing the concentration of organometallic species by removing, or limiting in other ways, the amount of solvent, if solvent, which is an optional ingredient at this point in the process, is present.

A preferred process, for forming catalytically useful polymethylaluminoxane with the resulting, polymethylaluminoxane composition, in certain embodiments being a polymethylaluminoxane composition which is substantially free of trimethylaluminum, comprises the thermal and/or catalytic transformation of an appropriately constituted precursor composition as earlier described. A preferred method for preparing the precursor composition is treatment of trimethylaluminum with a carboxylic acid or with carbon dioxide. However, as will be appreciated by a person of ordinary skill in the art, there are many other methods which can be used to prepare the precursor composition which is transformed into the desired final product.

If desired, supported polyalkylaluminoxane compositions can be prepared by conducting the aforementioned reaction in the presence of a suitable support material. Alternatively, supported alkylaluminoxanes may also be prepared by forming the alkylaluminoxanes of this invention in a discrete, separate step and subsequently allowing the alkylaluminoteane to react with the support material. oxidic support materials, such as silica, are especially preferred. It is preferred to have the alkylaluminoxane in a suitable, heated solvent at a temperature high enough (e.g., at least 85°C, preferably about 100°C) so that the alkylaluminoxane is in soluble form and, after being combined with the support material, will come out of solution and contact that support as the total system is alloowed to cool.

It has now discovered that the non-hydrolytic PMAO ("PMAO-IP") has surprising advantages over conventional, hydrolytically prepared PMAO in the preparation of the aforementioned supported methylaluminoxanes ("SMAO"). PCT Patent Publication No. WO 96/16092 describes a supported catalyst component prepared by heating a support material containing aluminoxane under an inert atmosphere and at a temperature sufficient to fix aluminoxane to the support material. In this publication the aluminoxane and support are first contacted in a diluent or solvent, which is removed prior to the heat treatment step. This disclosure relies upon the use of an aluminoxane which is prepared by the controlled hydrolysis of trimethylaluminum species. The instant application discloses, non-hydrolytic routes to aluminoxanes, which have not previously been applied to the problem of preparing a supported catalyst component. Surprisingly, in accordance with the present invention, it has been found that the utilization of non-hydrolytic polymethylaluminoxane (PMAO-IP), instead of conventional, hydrolytic, polymethylaluminoxane (PMAO), allows for the preparation of a supported aluminoxane catalyst component with high recovery of aluminum, with low extractable aluminum, with superior ability to bind a transition metal component, and which can be converted to a catalyst with superior polymerization activity. When a corresponding supported aluminoxane catalyst component is prepared from conventional, hydrolytically prepared PMAO, poor recoveries of aluminum were observed, and the resulting supported aluminoxane catalyst component had an inferior ability to bind zirconium, for example.

As will be appreciated by the person of ordinary skill in the art, the aluminoxane products that can be made by the present process are useful as cocatalysts in those single-site (metallocene-based) catalyst systems which are useful in the polymerization of olefin monomers in a manner analogous to that in current use with the aluminoxane compositions that are currently known and used in that manner.

The present invention will be further illustrated by the Examples which follow.

### EXAMPLES

Standard air-free glovebox and Schlenk line techniques were used. Polymerization tests were conducted in hexane at 85 °C, under a total pressure of 150 psig (ethylene + hexane + hydrogen), using racethylenebisindenylzirconium dichloride:trimethylaluminum 1:30 as the catalyst precursor component with the aluminoxane present at 1000:1 Al:Zr. Trimethylaluminum (37.2 wt % Al) and polymethylaluminoxane (PMAO) in toluene (9.0 wt % Al) were obtained from Akzo Nobel Chemicals Inc., Deer Park TX, and used as received. Benzophenone and benzoic acid were obtained from Aldrich Chemical Co., placed under a nitrogen atmosphere, and otherwise used as received.

### EXAMPLE 1

A solution of trimethylaluminum (2.00 g trimethylaluminum, 15.6 g toluene) was treated with a solution of benzophenone (4.02 g benzophenone, 15.6 g toluene), and the resulting mixture heated at 60 °C for one and one half hours to give a solution of alkylaluminum arylalkoxides with the overall composition ((C₆H₅)₂MeCO)_{0.8}AlMe_{2.2}. Analysis of this product by ¹H NMR showed it to be a mixture of the discrete compounds: ((C₆H₅)₂MeCO)₁AlMe₂ and ((C₆H₅)₂MeCO)₁Al₂Me₅. This product could be heated, as is, for many hours at 60 °C and remain unchanged according to ¹H NMR.

A catalytic amount of PMAO (0.35 g, 9.0 wt % Al) was added to the alkylaluminum arylalkoxide solution, and the mixture heated at 60 °C for 3.2 hours. At the end of this time, analysis by ¹H NMR showed that alkoxy aluminum species were no longer present, and that aluminoxane moieties were present. An ethylene polymerization test, which normally yields about 700 kg PE/g Zr hr with conventional PMAO prepared by Akzo Nobel Chemicals Inc., gave 1380 kg PE/g Zr hr using this polymethylaluminoxane instead.

### EXAMPLE 2

A solution of trimethylaluminum (2.00 g trimethylaluminum, 3.10 g toluene) was treated with a solution of benzoic acid (1.35 g of benzoic acid in 18.4 g of toluene) at 0 °C. Methane gas was evolved. Analysis by ¹H NMR showed this mixture to contain PhMe₂COAl and Me-Al and Al-O-Al moieties. When this mixture was heated at 80°C for twenty-four hours, no change occurred.

A catalytic amount of PMAO (0.83 g, 9.0 wt % Al) was added to the alkylaluminum alkoxide and aluminoxane solution, and solvent removed in vacuo, to give a clear, slightly viscous liquid. This liquid was heated at 80°C for 1 hr and 55 minutes, to give a clear, amorphous, toluene soluble solid. Analysis by ¹H NMR showed that alkoxy aluminum species were no longer present, and that aluminoxane moieties were present. As no insoluble aluminum-containing byproducts were formed, this preparation gave a quantitative yield of catalytically useful polymethyl-aluminoxane. In an accelerated aging test, conducted at 50°C, the polymethylaluminoxane prepared by this Example remained clear, homogeneous and free of gels for up to ten days, while a conventional, hydrolytically prepared, commercial PMAO showed gel formation within three to five days at the same temperature. An ethylene polymerization test gave 680 kg PE/g Zr hr using this polymethylaluminoxane.

### EXAMPLE 3

TMAL (15.00 g) was mixed with toluene (9.25 g) and was then reacted with carbon dioxide (3.74 g) at room temperature to form an alkoxyaluminum and alkylaluminoxane-containing PMAO precursor composition. This mixture was heated at 100° C for twenty-four hours to give a clear, viscous liquid whose ¹H NMR showed it to have been converted to PMAO. Alkoxyaluminum species were no longer detectable by NMR analysis. As no insoluble aluminum-containing byproducts were formed, this preparation gave a quantitative yield of catalytically useful polymethylaluminoxane. A polymerization test with this material yielded 2400 kg PE/g Zr hr in a thirty minute test.

### EXAMPLE 4

Using the same procedure that is described in Example 2, TMAL (8.00 g) in 9.51 g of toluene was treated with neat benzoic acid (5.40 g) to give an arylalkoxyaluminum-containing methylaluminoxane precursor. Heating of this mixture at 80°C for five hours gave conversion to PMAO. As no insoluble aluminum-containing byproducts were formed, this preparation gave a quantitative yield of catalytically useful polymethylaluminoxane.

Fig. 1 shows the Me-Al region of a ¹H NMR spectrum of conventional PMAO obtained from a commercial source. The spectrum clearly contains two signals, a broad signal due to methylaluminoxane species, and a sharper signal due to trimethylaluminum species. Fig. 2 shows the same region of the spectrum of PMAO prepared in this Example. Unlike the commercially available PMAO, the material of this invention shows only one broad signal in the depicted region. The product is substantially free of TMAL in that no distinct ¹H NMR signal from TMAL is discernible.

### EXAMPLE 5

A solution of trimethylaluminum (8.0 g in 4.94 g of decane) was treated with carbon dioxide (1.9 g of carbon dioxide) over a period of eight hours. Analysis by ¹H NMR showed this mixture to contain (CH₃)₃CO-Al, CH₃-Al, and Al-O-Al moieties. Heating this sample at 100°C for twenty-four hours caused no change in the ¹H NMR spectrum. However, when heated for five hours at 120°C, the reaction mixture became slightly hazy, forming a viscous liquid after cooling. Since it was not necessary to separate solid, aluminum-containing byproducts from this product, this preparation gave a quantitative yield of catalytically useful polymethylaluminoxane. Analysis by ¹H NMR showed signals due to decane solvent, traces of residual t-butoxy signals, and a broad signal due to methylaluminoxane species.

An ethylene polymerization test gave 1100 kg PE/g Zr/hr using the polymethylaluminoxane prepared in this Example.

### EXAMPLES 6-15

All manipulations in these Examples were conducted with the best available air-free techniques, including Schlenk line manipulations and inert atmosphere glove-box techniques. On-line monitoring of the box atmosphere generally showed 0.1-1.5 ppm oxygen (with brief excursions to 2-6 ppm when opening the ante-chamber door) and 0.5-3 ppm water (with excursions to about 6 ppm). Polymerization tests were conducted in a jacketed one liter stainless steel ZIPPERCLAVE autoclave from Autoclave Engineers. The polymerization reactions were conducted with 10.3 barg (150 psig) ethylene supplied on demand to a reactor charged with 25-50 mg of the catalyst (containing 1-2 micromoles Zr, depending on expected activity and planned test duration), 500 mL hexane, and 2 mmole TEAL (present as a scavenger). Prior to each polymerization test, the reactor body was removed and oven dried for one hour at 100°C-120°C (with water drained from the heating/cooling jacket). The reactor was always reassembled while the body was still hot from the oven, and purged with nitrogen for 15-30 minutes while the reactor cooled somewhat. After purging, the recirculating bath was reconnected, and the reactor heated to 50°C. The reactor was pre-treated with TEAL (0.2 mmole) in hexane (300 mL).

Prior to use, DAVISON 948 micro-spherical silica was dehydrated by calcination in a nitrogen fluidized bed. Table 1 summarizes silica used in this work.

Non-hydrolytically prepared polymethylaluminoxane (PMAO-IP) was prepared according to the general teachings of Example 3 contained herein.

**Table 1**

| Calcination results. | | | |
|---|---|---|---|
| | Calcination Temp. °C | wt. loss (%) | Residual OH mmole/g |
| Silica A | 200 °C | 3.9 | 1.52 |
| Silica B | 400 °C | 6.2 | 1.06 |
| Silica C | 400 °C | 5.5 | 1.06 |
| Silica D | 660 °C | 7.1 | 0.65 |
| Silica E | 600 °C | 6.2 | 0.71 |

General Procedure for Making SMAO: This is the procedure used for all the samples in Tables 2 and 3. A three-neck glass reactor (250 mL), equipped with gas inlet, fritted-glass barrier gas-outlet, temperature sensor and overhead stirrer (crescent-shaped paddle) was placed under a nitrogen atmosphere and charged with 10.11 g silica (Silica D). Toluene (45 g) was added to form a slurry, and stirring was begun. An aliquot of PMAO-IP solution (14.91 g, 14.8 wt % Al) was then added, dropwise, over 0.5 hour with stirring at 23-24°C. After the addition was completed, the reaction mixture was heated to 100°C in order to isure solubilization of the PMAO-IP, and was held at that temperature for one hour. After the reaction mixture had cooled back to room temperature, it was transferred via a 0.635 cm (1/4 inch) outer diameter polyethylene tube cannula to a bottom-fritted three-neck glass reactor (250 mL), equipped with gas inlet, fritted-glass barrier gas-outlet, and temperature sensor. The supernate was removed, and the SMAO product was isolated by filtration through the bottom frit. The filtrate was collected and was set aside for analysis. The SMAO was then vacuum dried in a bath at 50°C to obtain a free-flowing powder. The results are summarized in Tables 2 and 3 which follow:

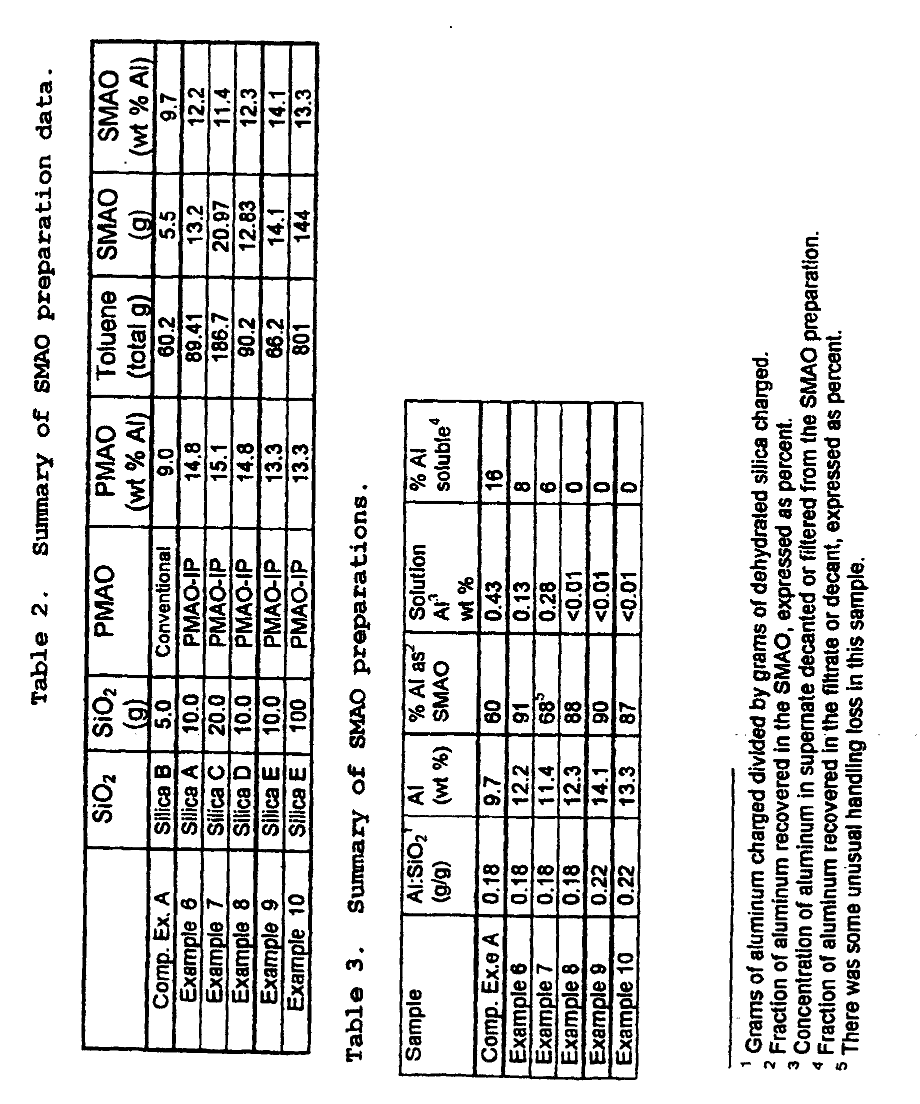

### Conversion to catalyst:

The SMAO samples in Table 3 were converted to single-site based ethylene polymerization catalysts by allowing up to 1 Zr:100 Al to bind with the SMAO from a solution of a bis-indenyl dimethylzirconium (BIZ-M) in toluene. A 250 mL catalyst preparation flask (3 neck flask with bottom frit), with an ace-threaded gas inlet adapter containing a thermocouple, a stopper, and a fritted gas adapter, was set up and was tested for vacuum. Working in the glovebox, the apparatus was charged with 5 grams of the selected SMAO sample, and the central stopper was replaced with an overhead stirring shaft. At the same time, one 10 g, and three 15 gram charges of dry toluene were set up in serum-capped sample vials. Also prepared at this time was a 50 mL septum bottle with BIZ-M (usually about 100 mg) and a small stir bar. Enough toluene (typically 30 g) was added to obtain complete dissolution.

Working on a Schlenk line, the first 10 g charge of toluene was used to slurry the silica. Gentle stirring was then begun. Enough BIZ-M solution to provide 1 Zr:100 Al in the SMAO sample was then added, and the mixture was heated to 50°C for one hour and was then filtered. The catalyst was then washed with two of the 15 g toluene charges. All the filtrates were combined.

The stirrer was replaced with a stopper, and the catalyst was vacuum dried at room temperature until "fountaining" of catalyst (due to out-gassing of solvent vapors) was no longer observed (generally less than thirty minutes). After this, the catalyst was dried for an additional thirty minutes at room temperature, and then thirty more minutes at 35 °C. Tables 4-6 which follow gives a summary of the catalyst preparations and performance data:

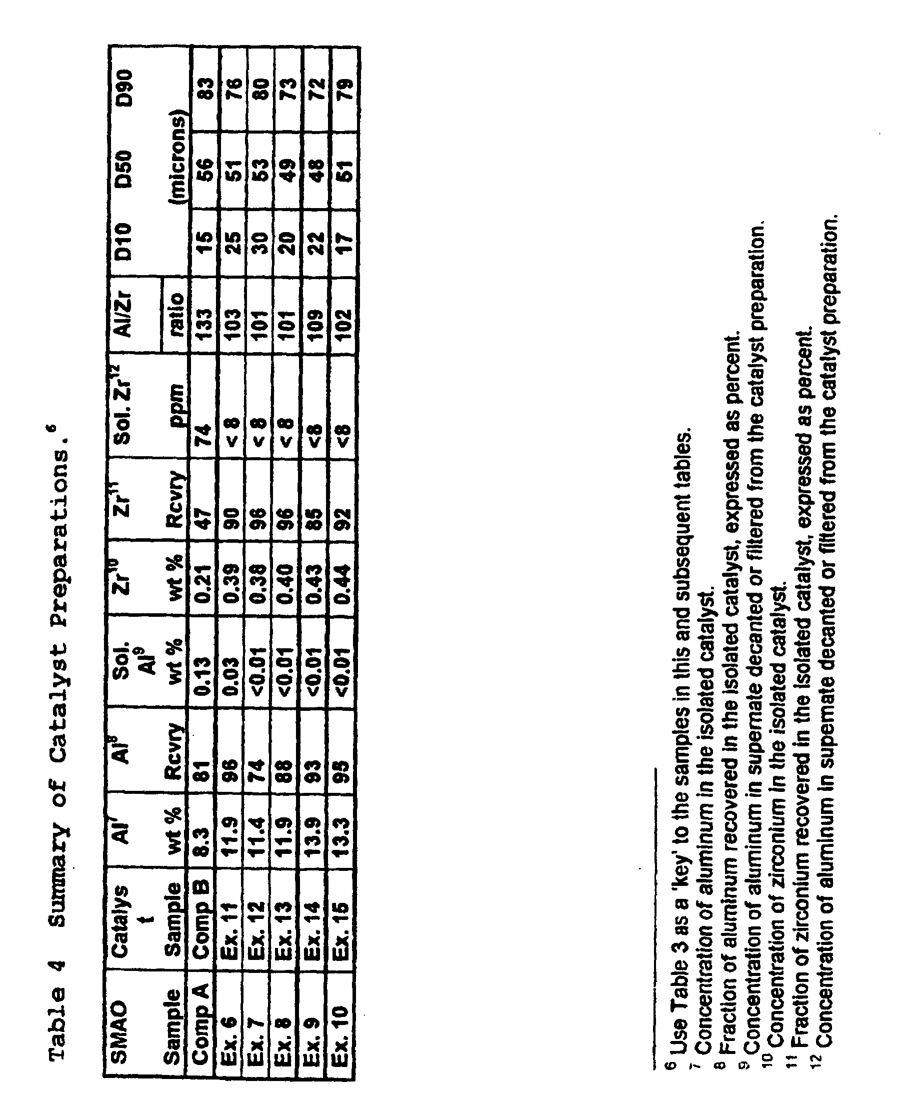

**Table 6.**

| Summary of performance results. | | | | | | |
|---|---|---|---|---|---|---|
| SMAO Sample | Cat. Sample | Activity | D10 | D50 | D90 | PBD |
| | | kg PE/g hr | (microns) | | | g/mL |
| Comp A | Comp B | 0.5 | - | - | - | 0.39 |
| Ex. 6 | Ex.11 | 0.6 | 306 | 388 | 468 | 0.32 |
| Ex. 7 | Ex. 12 | 0.7 | - | - | - | 0.34 |
| Ex. 8 | Ex. 13 | 0.65 | - | - | - | 0.34 |
| Ex. 9 | Ex. 14 | 1.6 | 432 | 507 | 573 | 0.36 |
| Ex. 10 | Ex. 15 | 1.3 | 392 | 451 | 492 | 0.36 |

The data show above shows that PMAO-IP binds more completely to calcined silica than conventional PMAO-IP, allows for the preparation of SMAO with a higher aluminum loading, and results in SMAO that binds more completely to zirconium species thereby forming a more active catalyst.

The foregoing Examples, since they merely illustrate certain embodiments of the present invention, should not be construed in a limiting sense. The scope of protection sought is set forth in the claims which follow.

## Claims

1. A process comprising the steps of:
i) formation of an aluminoxane precursor by the reaction of a trialkylaluminum compound, or a mixture of trialkylaluminum compounds, and a compound containing a carbon-to-oxygen bond,
ii) the non-hydrolytic transformation of said precursor, optionally in the presence of a solvent, by means of a thermal and/or catalytic transformation, to form a catalytically useful aluminoxane composition,
iii) optionally fixing the aluminoxane of step ii) on a support, and
iv) using the, optionally supported, aluminoxane of step ii), or step iii), in the polymerization of olefin monomer(s).

2. The process of claim 1 wherein the aluminoxane precursor composition is formed by the reaction of a trialkylaluminum compound, or a mixture of trialkylaluminum compounds, and carbon dioxide.

3. The process of claim 1 wherein the aluminoxane precursor composition is formed by the reaction of a trialkylaluminum compound, or a mixture of trialkylaluminum compounds, and a compound selected from the group consisting of alcohols, ketones, and carboxylic acids.

4. The process of claim 2 wherein the precursor composition is thermally transformed.

5. The process of claim 4 wherein use is made of a mixture of trialkylaluminum compounds comprising trimethylaluminum and one or more trialkylaluminum compounds having an alkyl group with two or more carbon atoms.

6. The process of any one of the preceding claims wherein the, optionally supported, catalytically useful aluminoxane in the composition of step ii) is used in the polymerization of olefin monomer(s) as a cocatalyst in a single-site (metallocene based) catalyst system.

## Patentansprüche

1. Verfahren, umfassend die Schritte der
i) Bildung einer Aluminoxan-Vorstufe durch die Umsetzung einer Trialkylaluminiumverbindung oder einer Mischung von Trialkylaluminiumverbindungen mit einer eine Kohlenstoff-Sauerstoff-Bindung enthaltenden Verbindung,
ii) nichthydrolytischen Umwandlung der Vorstufe gegebenenfalls in Gegenwart eines Lösungsmittels mittels einer thermischen und/oder katalytischen Umwandlung zur Bildung einer katalytisch brauchbaren Aluminoxan-Zusammensetzung,
iii) gegebenenfalls der Fixierung des Aluminoxans von Stufe ii) auf einem Träger und der
iv) Verwendung des gegebenenfalls trägergestützten Aluminoxans von Stufe ii) oder Stufe iii) bei der Polymerisation eines Olefinmonomers (von Olefinmonomeren).

2. Verfahren nach Anspruch 1, wobei die Aluminoxan-Vorstufenzusammensetzung durch die Umsetzung einer Trialkylaluminiumverbindung oder einer Mischung von Trialkylaluminiumverbindungen mit Kohlendioxid gebildet wird.

3. Verfahren nach Anspruch 1, wobei die Aluminoxan-Vorstufenzusammensetzung durch die Umsetzung einer Trialkylaluminiumverbindung oder einer Mischung von Trialkylaluminiumverbindungen mit einer Verbindung, die aus der aus Alkoholen, Ketonen und Carbonsäuren bestehenden Gruppe ausgewählt ist, erhalten wird.

4. Verfahren nach Anspruch 2, wobei die Vorstufenzusammensetzung thermisch umgewandelt wird.

5. Verfahren nach Anspruch 4, wobei eine Mischung von Trialkylaluminiumverbindungen genutzt wird, die Trimethylaluminium und eine oder mehr Trialkylaluminiumverbindungen mit einer Alkylgruppe mit zwei oder mehr Kohlenstoffatomen umfasst.

6. Verfahren nach einem der vorherigen Ansprüche, wobei das gegebenenfalls trägergestützte, katalytisch brauchbare Aluminoxan in der Zusammensetzung von Schritt ii) bei der Polymerisation eines Olefinmonomers (von Olefinmonomeren) als Cokatalysator in einem Katalysatorsystem mit einer Reaktionsstelle (auf Metallocen-Grundlage) verwendet wird.

## Revendications

1. Procédé comprenant les étapes de :
i) formation d'un précurseur aluminoxane par la réaction d'un composé trialkylaluminium, ou d'un mélange de composés trialkylaluminium, et d'un composé contenant une liaison carbone-oxygène,
ii) transformation non hydrolytique dudit précurseur, éventuellement en présence d'un solvant, au moyen d'une transformation catalytique et/ou thermique, pour former une composition d'aluminoxane catalytiquement utile,
iii) fixation éventuelle de l'aluminoxane de l'étape ii) sur un support, et
iv) utilisation de l'aluminoxane, éventuellement supporté, de l'étape ii) ou de l'étape iii), dans la polymérisation de monomère( s) d'oléfine.

2. Procédé selon la revendication 1, dans lequel la composition de précurseur aluminoxane est formée par la réaction d'un composé trialkylaluminium ou d'un mélange de composés trialkylaluminium, et de dioxyde de carbone.

3. Procédé selon la revendication 1, dans lequel la composition de précurseur aluminoxane est formée par la réaction d'un composé trialkylaluminium ou d'un mélange de composés trialkylaluminium, et d'un composé choisi dans le groupe comprenant les alcools, les cétones et les acides carboxyliques.

4. Procédé selon la revendication 2, dans lequel la composition de précurseur est thermiquement transformée.

5. Procédé selon la revendication 4, dans lequel un mélange de composés trialkylaluminium comprenant du triméthylaluminium et un ou plusieurs composés trialkylaluminium ayant un groupe alkyle avec deux atomes de carbone ou plus est utilisé.

6. Procédé selon l'une quelconque des revendications précédentes, dans lequel l'aluminoxane, éventuellement supporté, catalytiquement utile dans la composition de l'étape ii) est utilisé dans la polymérisation de monomère(s) d'oléfine comme co-catalyseur dans un système de catalyseur à site unique (à base de métallocène).
